# EUROPÄISCHE PATENTSCHRIFT

(11) **EP 3 662 175 B1**
(45) Veröffentlichungstag und Bekanntmachung des Hinweises auf die Patenterteilung: **12.05.2021**
(21) Anmeldenummer: 18759045.0
(22) Anmeldetag: 02.08.2018
(51) Int. Cl.: F16D 65/12

(54) **BREMSSCHEIBE UND VERFAHREN ZUR HERSTELLUNG EINER BREMSSCHEIBE**
BRAKE DISC AND METHOD FOR PRODUCING A BRAKE DISC
DISQUE DE FREIN ET PROCÉDÉ DE FABRICATION D'UN DISQUE DE FREIN

(30) Priorität: 02.08.2017 DE 102017213363; 01.08.2018 DE 102018212865
(43) Veröffentlichungstag der Anmeldung: 10.06.2020
(73) Patentinhaber: Robert Bosch GmbH, 70442 Stuttgart (DE)
(72) Erfinder: RAAB, Roland, 69168 Wiesloch (DE); LE BARZIC, Laurent, 67000 Strasbourg (FR); BOZOVIC, Ilija, Djurinci Sopot 11450 (RS)
(86) Internationale Anmeldenummer: PCT/EP2018/070987
(87) Internationale Veröffentlichungsnummer: WO 2019/025536

(56) Entgegenhaltungen:
- DE-A1- 10 032 972
- DE-A1-102015 226 450

## Beschreibung

Die vorliegende Erfindung betrifft eine Bremsscheibe bzw. ein Verfahren zur Herstellung einer Bremsscheibe mit den Merkmalen der unabhängig formulierten Ansprüche.

Bremsscheiben haben die Aufgabe, das Bremsmoment bei einer Verzögerung des Fahrzeugs auf die Achse zu übertragen sowie die bei der Bremsung auftretende kinetische Energie kurzzeitig in Form von Wärme zwischenzuspeichern und nachfolgend über Leitung, Strahlung und Konvektion wieder abzugeben.

Bremsscheiben werden im Stand der Technik üblicherweise einteilig aus Gusseisen mit Lamellengraphit erzeugt.

Im Rahmen des Leichtbau werden Bremsscheiben, insbesondere im Bereich des Bremstopfes, durch andere, in der Regel leichtere Materialien als Grauguss ersetzt. Beispielhaft ist hier ein Blechtopf zu nennen. Ebenfalls kann der Bremstopf durch einen Aluminiumtopf ersetzt werden. Beispielhaft ist hierzu die DE 100 32 972 B4 zu nennen. Hier ist eine Verbund-Bremsscheibe für eine Fahrzeug beschrieben, die einen aus Gusswerkstoff ausgeführten Reibring aufweist, der an einem aus einem anderen Werkstoff bestehenden Bremsscheibentopf befestigt ist. Der Reibring wird nun mit dem Bremstopf mittels einer Fügestelle zwischen Reibring und Bremsscheibentopf durch Verbindungselemente verbunden. In der DE10032972A1 ist gezeigt, Bremstopf und Reibring mit Nieten zu verbinden, hier ist aber nicht gezeigt, dass der Rand und/oder der Bund wenigstens im Bereich, in dem der Niet angreift eben ausgestaltet ist.

### Offenbarung der Erfindung

Die Erfindung geht aus von einer Bremsscheibe mit
- einem wenigstens zum Teil aus einem ersten Material bestehenden Reibring, einem wenigstens zum Teil aus einem vom ersten Material unterschiedlichen zweiten Material bestehenden Bremstopf, wobei
   der Reibring einen in axial Richtung ausgebildeten Bund aufweist, und der Bund mit einem axial zum Reibring hin gerichteten Rand des Bremstopfs mittels wenigstens einem Verbindungselement verbunden ist.

Der Kern der Erfindung besteht darin, dass der Rand und/oder der Bund wenigstens im Bereich des wenigstens einen Verbindungselements eben ausgestaltet ist. Das heißt, dass die Oberfläche des Rands und/oder des Bunds wenigstens im Bereich des wenigstens einen Verbindungselements eben ausgestaltet ist. Erfindungsgemäß ist vorgesehen, dass, der Rand und/oder der Bund kreisförmig mit einer teilweise gekrümmten Mantelfläche ausgebildet ist. Die gemeinsame Achse von Bund und Rand ist dabei im eingebauten Zustand der Bremsscheibe die Radachse. In dieser Ausgestaltung der Erfindung ist vorgesehen, dass die Mantelfläche wenigstens in dem Bereich, der mit dem Verbindungselement in Kontakt ist, eben ausgestaltet ist. Das heißt, dass der im Wesentlichen kreisförmig gekrümmt ausgestaltete Rand und/oder Bund wenigstens im Bereich, der der mit dem Verbindungselement in Kontakt ist, eben, also in diesem Bereich nicht gekrümmt, ausgestaltet ist.

Um eine stabile mechanische Verbindung zwischen dem Bund des Reibrings und dem Bremstopfs zu realisieren, ist eine gute mechanische Verbindung zwischen dem Verbindungselement und dem Bremstopf und/oder Bund notwendig. Dies könnte beispielsweise durch Ausnehmungen im Bereich der Verbindungselemente erreicht werden. Das Material eines Bremstopfs in Leichtbauweise hat aber in der Regel nur eine Dicke von ca. 2,5 mm bis 2,8 mm. Aus diesem Grund würde eine Ausnehmung im Bereich eines Verbindungselements zu einer weiteren Reduktion des ohnehin bereits sehr dünnen Materials führen. Die Erfindung löst dieses Problem, indem der Bremstopf und/oder der Bund wenigstens im Bereich des Verbindungselements eben ausgestaltet ist. Damit kommt es zu einer sehr stabilen mechanischen Verbindung zwischen dem Bund des Reibrings und dem Rand des Bremstopfs, also somit zwischen Reibring und Bremstopf. Besonders vorteilhaft sind sowohl der Ring als auch der Bund in diesem Bereich gemeinsam eben ausgestaltet. Die ebene Ausgestaltung geschieht dabei ausdrücklich nicht durch Materialabtrag wie es bei einer Einsenkung oder Ausnehmung der Fall wäre, da für einen solchen Materialabtrag wie eingangs erwähnt das Material des Bremstopfs relativ dick und damit schwer sein müsste. Die ebene Ausgestaltung geschieht dabei also insbesondere unter Beibehaltung der Dicke des Bremstopfes und damit unter Beibehaltung der Dicke des Randes des Bremstopfes. Die Ausgestaltung der ebenen Mantelflächen, insbesondere die des Randes des Bremstopfes kann beispielsweise durch einen Pressvorgang oder einen Tiefziehvorgang geschehen.

In einer vorteilhaften Ausgestaltung der Erfindung ist vorgesehen, dass das wenigstens eine Verbindungselement als Niet ausgebildet ist. Hierdurch kommt es in sehr einfacher Weise zu der erwähnten stabilen mechanischen Verbindung.

Besonders vorteilhaft ist es, dass der Bremstopf wenigstens zum Teil aus Leichtmetall, insbesondere Aluminium, besteht. Ebenso kann der Bremstopf wenigstens zum Teil aus Metall, insbesondere Blech, besteht.

Der Reibring kann aus Grauguss bestehen.

In einer vorteilhaften Ausgestaltung der Erfindung ist vorgesehen, dass der Bund an dem Reibring angeformt ausgebildet ist.

In einer besonders vorteilhaften Ausgestaltung der Erfindung ist vorgesehen, dass der Bund und/oder der Rand zwischen zwei eben ausgestalteten Bereichen einen gebogenen Bereich aufweist. Das heißt, dass die Oberfläche des Rands und/oder des Bunds zwischen zwei eben ausgestalteten Oberflächenbereichen gekrümmt ausgestaltet ist.

Die Erfindung betrifft auch ein Verfahren zur Herstellung der erfindungsgemäßen Bremsscheibe. Dabei weist das erfindungsgemäße Verfahren die folgenden Schritte auf:
- Bereitstellen wenigstens eines aus einem ersten Material bestehenden Reibrings mit einem in axialer Richtung ausgebildeten Bund,
- Bereitstellen eines wenigstens zum Teil aus einem vom ersten Material unterschiedlichen zweiten Material bestehenden Bremstopfs,
- Verbinden des Bundes mit einem axial zum Reibring hin gerichteten Rand des Bremstopfs mittels wenigstens einem Verbindungselement.

Der Kern des erfindungsgemäßen Verfahrens besteht darin, dass der Rand und/oder der Bund wenigstens im Bereich des wenigstens einen Verbindungselements eben ausgestaltet ist.

Erfindungsgemäß ist vorgesehen, dass der Rand und/oder der Bund kreisförmig mit einer teilweise gekrümmten Mantelfläche ausgebildet ist. Die gemeinsame Achse von Bund und Rand ist dabei im eingebauten Zustand der Bremsscheibe die Radachse. Gemäß der Erfindung ist vorgesehen, dass die Mantelfläche wenigstens in dem Bereich, der mit dem Verbindungselement in Kontakt ist, eben ausgestaltet ist. Das heißt, dass der im Wesentlichen kreisförmig gekrümmt ausgestaltete Rand und/oder Bund wenigstens im Bereich, der der mit dem Verbindungselement in Kontakt ist, eben, also in diesem Bereich nicht gekrümmt, ausgestaltet ist. Besonders vorteilhaft sind sowohl der Ring als auch der Bund in diesem Bereich gemeinsam
eben ausgestaltet. Die ebene Ausgestaltung geschieht dabei ausdrücklich nicht durch Materialabtrag wie es bei einer Einsenkung oder Ausnehmung der Fall wäre, da für einen solchen Materialabtrag wie eingangs erwähnt das Material des Bremstopfs relativ dick und damit schwer sein müsste. Die ebene Ausgestaltung geschieht dabei also insbesondere unter Beibehaltung der Dicke des Bremstopfes und damit unter Beibehaltung der Dicke des Randes des Bremstopfes. Die Ausgestaltung der ebenen Mantelflächen, insbesondere die des Randes des Bremstopfes kann beispielsweise durch einen Pressvorgang oder einen Tiefziehvorgang geschehen.

Weitere vorteilhafte Ausgestaltungen der Erfindung sind den Unteransprüchen und dem Ausführungsbeispiel zu entnehmen.

### Zeichnungen

Nachfolgend werden Ausführungsbeispiele der Erfindung anhand von Zeichnungen erläutert.

Die Figur 1 zeigt eine fertig montierte Bremsscheibe in Leichtbauweise gemäß der Erfindung.

Die Figur 2 zeigt eine Bremsscheibe in Leichtbauweise vor der Montage gemäß der Erfindung.

Die Figur 3 zeigt eine fertig montierte Bremsscheibe in Leichtbauweise gemäß der Erfindung als Schnittbild.

Die Figur 4 zeigt das erfindungsgemäße Herstellungsverfahren.

### Beschreibung von Ausführungsbeispielen

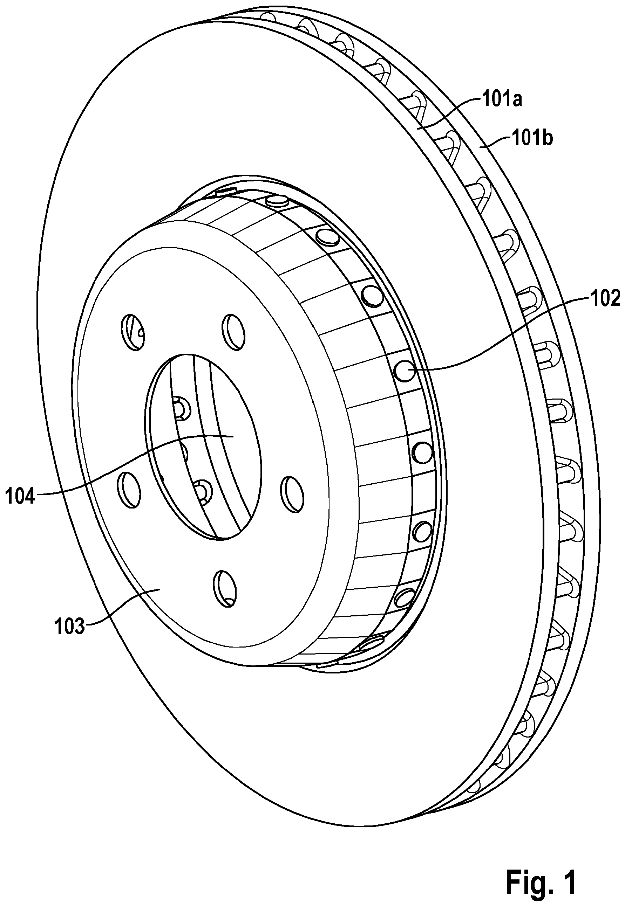

Die in Figur 1 dargestellte Bremsscheibe weist zwei kreisringscheibenförmigen Bremsringe 101a und 101b auf, die mit Distanzelementen verbunden sind. Die dargestellte Bremsscheibe ist innenbelüftet, ihr Bremsring ist doppelwandig. Äußere Stirnflächen des Bremsrings bilden kreisringscheibenförmige Reibflächen 101a und 101b der Bremsscheibe. Die Reibflächen sind die Oberflächen der Bremsscheibe, gegen die beim Bremsen nicht dargestellte Reibbremsbeläge gedrückt werden, um die Bremsscheibe durch Reibung zu bremsen. Die Bremsscheibe besteht in diesem Ausführungsbeispiel aus Grauguss oder einer Stahllegierung. Die Bremsscheibe weist mittig eine Ausnehmung 104 auf.

Mit dem Bezugszeichen 103 ist der Bremstopf gekennzeichnet, der mittels der Verbindungselemente 102 mit der Bremsscheibe verbunden ist.

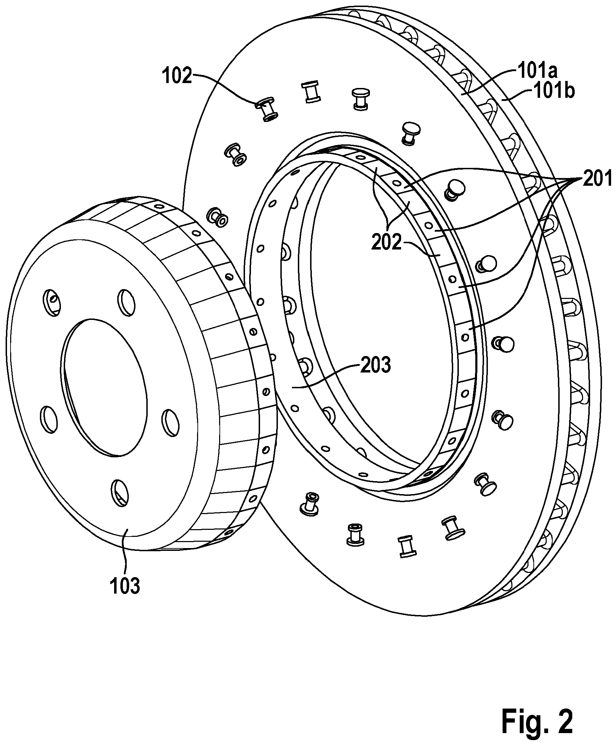

Die Figur 2 zeigt die in der Figur 1 dargestellte Bremsscheibe vor der Verbindung des Bremstopfs 103 mit der Bremsscheibe 101a/b.

Axialsymmetrisch an der Bremsscheibe 101a/b angebracht ist ein Bund 203 mit den Außenflächen 201 und 202. Der Bund 203 kann an die Bremsscheibe oder an einem der Reibringe angeformt sein oder zwei- oder mehrstückig mit der Bremsscheibe verbunden sein.

Die Verbindungselemente 102 sind über ihren zugehörigen Löchern in dem Bund 203 dargestellt. Zur Verbindung zwischen Bremstopf 103 und Bremsscheibe 101a/b werden die im äußeren Rand des Bremstopfs 103 vorgesehen Löcher mit den erwähnten Löcher im Bund in Überdeckung gebracht. Danach können die hier als Nieten 201 vorgesehenen Verbindungsmittel angebracht werden.

In der Figur 2 ist weiterhin zu sehen, dass erfindungsgemäß sowohl der Bund als auch der äußere Rand des Bremstopfs 103 gebogene, gekrümmte und/oder kreisbogenförmige Flächen 202 und ebene Flächen 201 aufweisen. Die ebenen Flächen 201 sind dabei im Bereich der Löcher vorgesehen. Die gebogenen, gekrümmte und/oder kreisbogenförmigen Flächen 202 folgen im Wesentlichen der durch die runde Ausnehmung 104 vorgegebenen Form.

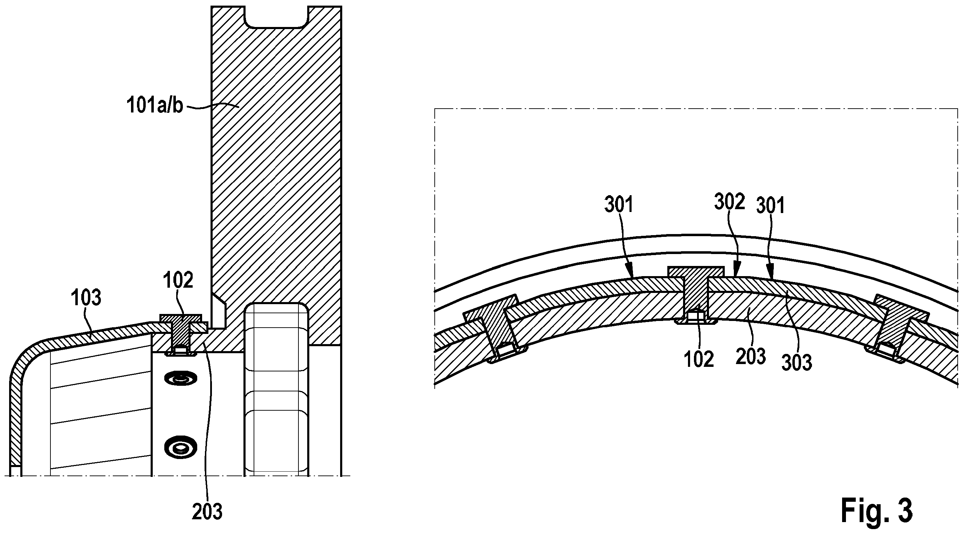

Die Figur 3 zeigt eine fertig montierte Bremsscheibe in Leichtbauweise gemäß der Erfindung als Schnittbild. Hier ist im linken Teil der Figur 3 eine auf die Bremsscheibe bezogene Seitenansicht der fertig zusammengebauten Bremsscheibe zu sehen während im rechten Teil der Figur 3 eine auf die Bremsscheibe bezogene Draufsicht zu sehen ist. Im rechten Teil der Figur 3 sind mit 301 die gebogenen, gekrümmten und/oder kreisbogenförmigen sowie mit 302 die ebenen Bereiche des Bremstopfes 303 bzw. des Randes des Bremstopfes zu sehen. Durch die ebenen Bereiche wird ein flächiger Kontakt zwischen dem Nietkopf 102 und der zu verbindenden Teile erzielt. Dies führt wie Eingang erwähnt zu der stabilen Verbindung zwischen Bremstopf und Reibring.

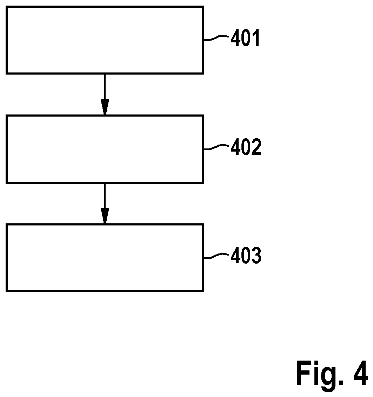

Anhand der Figur 4 soll nun das Verfahren zur Herstellung der erfindungsgemäßen Bremsscheibe erläutert werden.

Im Schritt 401 wird der Reibrings 101a/b mit einem in axial Richtung ausgebildeten Bund 201, 202, 203 bereitgestellt. Im Schritt 402 wird der Bremstopf 103 mit einem zum Reibring 101a/b hin gerichteten Rand bereitgestellt. Der Rand und/oder der Bund ist dabei wenigstens im Bereich 201, 302 des wenigstens einen Verbindungselements 102 eben ausgestaltet.

Im Schritt 403 wird der Bund mit dem Rand 201, 202, 203 des Bremstopfs 103 mittels wenigstens einem Verbindungselement 102 verbunden.

## Patentansprüche

1. Bremsscheibe mit
einem wenigstens zum Teil aus einem ersten Material bestehenden Reibring (101a, 101b), und
einem wenigstens zum Teil aus einem vom ersten Material unterschiedlichen zweiten Material bestehenden Bremstopf (103), wobei
der Reibring (101a, 101b) einen in axiale Richtung ausgebildeten Bund (201, 202, 203) aufweist, und
der Bund (201, 202, 203) mit einem axial zum Reibring (101a, 101b) hin gerichteten
Rand des Bremstopfs (103) mittels wenigstens eines Verbindungselements (102) verbunden ist, wobei
der Rand und/oder der Bund wenigstens im Bereich (201, 302) des wenigstens einen Verbindungselements (102) eben ausgestaltet ist und
der Rand und/oder der Bund kreisförmig mit einer teilweise gekrümmten Mantelfläche ausgebildet ist und die Mantelfläche wenigstens im Bereich (201, 302), der mit dem Verbindungselement (102) in Kontakt ist, eben ausgestaltet ist.

2. Bremsscheibe nach Anspruch 1, **dadurch gekennzeichnet, dass** das wenigstens eine Verbindungselement als Niet (102) ausgebildet ist.

3. Bremsscheibe nach einem der Ansprüche 1 bis 2, **dadurch gekennzeichnet, dass** der Bremstopf (103) wenigstens zum Teil aus Leichtmetall, insbesondere Aluminium, besteht.

4. Bremsscheibe nach einem der Ansprüche 1 bis 3, **dadurch gekennzeichnet, dass** der Bremstopf (103) wenigstens zum Teil aus Metall, insbesondere Blech, besteht.

5. Bremsscheibe nach einem der Ansprüche 1 bis 4, **dadurch gekennzeichnet, dass** der Reibring (101a, 101b) aus Grauguss besteht.

6. Bremsscheibe nach einem der Ansprüche 1 bis 5, **dadurch gekennzeichnet, dass** der Bund (201, 202, 203) an dem Reibring (101a, 101b) angeformt ausgebildet ist.

7. Bremsscheibe nach einem der Ansprüche 1 bis 6, **dadurch gekennzeichnet, dass** der Bund (201, 202, 203) und/oder der Rand zwischen zwei eben ausgestalteten Bereichen (201, 302) einen gebogen und/oder gekrümmt ausgestalteten Bereich (202, 301) aufweist.

8. Verfahren zur Herstellung einer Bremsscheibe nach Anspruch 1, **gekennzeichnet durch** folgende Schritte:
Bereitstellen (401) wenigstens eines aus einem ersten Material bestehenden Reibrings (101a, 101b) mit einem in axialer Richtung ausgebildeten Bund (201, 202, 203),
Bereitstellen (402) eines wenigstens zum Teil aus einem vom ersten Material unterschiedlichen zweiten Material bestehenden Bremstopfs (103),
Verbinden (403) des Bundes (201, 202, 203) mit einem axial zum Reibring (101a, 101b) hin gerichteten Rand des Bremstopfs (103) mittels wenigstens einem Verbindungselement (102), wobei
der Rand und/oder der Bund wenigstens im Bereich (201, 302) des wenigstens einen Verbindungselements (102) eben ausgestaltet ist und
der Reibring und/oder der Bund kreisförmig mit einer teilweise gekrümmten Mantelfläche ausgebildet ist und die Mantelfläche wenigstens im Bereich (201, 302), der mit dem Verbindungselement (102) in Kontakt ist, eben ausgestaltet ist.

9. Bremsscheibe nach Anspruch 8, **dadurch gekennzeichnet, dass** die ebene Ausgestaltung durch einen Pressvorgang oder Tiefziehvorgang stattfindet.

## Claims

1. Brake disc with
a friction ring (101a, 101b) which consists at least in part of a first material, and
a brake pot (103) which consists at least in part of a second material which is different from the first material,
the friction ring (101a, 101b) having a collar (201, 202, 203) which is configured in the axial direction, and the collar (201, 202, 203) being connected by means of at least one connecting element (102) to an edge of the brake pot (103), which edge is directed axially towards the friction ring (101a, 101b),
the edge and/or the collar being of planar configuration at least in the region (201, 302) of the at least one connecting element (102), and
the edge and/or the collar being configured in a circular manner with a partially curved shell face, and the shell face being of planar configuration at least in the region (201, 302) which is in contact with the connecting element (102).

2. Brake disc according to Claim 1, **characterized in that** the at least one connecting element is configured as a rivet (102).

3. Brake disc according to either of Claims 1 and 2, **characterized in that** the brake pot (103) consists at least in part of light metal, in particular aluminium.

4. Brake disc according to one of Claims 1 to 3, **characterized in that** the brake pot (103) consists at least in part of metal, in particular sheet metal.

5. Brake disc according to one of Claims 1 to 4, **characterized in that** the friction ring (101a, 101b) consists of grey cast iron.

6. Brake disc according to one of Claims 1 to 5, **characterized in that** the collar (201, 202, 203) is configured such that it is integrally formed on the friction ring (101a, 101b).

7. Brake disc according to one of Claims 1 to 6, **characterized in that** the collar (201, 202, 203) and/or the edge have/has a region (202, 301) of bent and/or curved configuration between two regions (201, 302) of planar configuration.

8. Method for producing a brake disc according to Claim 1, **characterized by** the following steps:
providing (401) at least one friction ring (101a, 101b), which consists of a first material, with a collar (201, 202, 203) which is configured in the axial direction, providing (402) a brake pot (103) which consists at least in part of a second material which is different from the first material,
connecting (403) the collar (201, 202, 203) by means of at least one connecting element (102) to an edge of the brake pot (103), which edge is directed axially towards the friction ring (101a, 101b),
the edge and/or the collar being of planar configuration at least in the region (201, 302) of the at least one connecting element (102), and
the friction ring and/or the collar being of circular configuration with a partially curved shell face, and the shell face being of planar configuration at least in the region (201, 302) which is in contact with the connecting element (102).

9. Brake disc according to Claim 8, **characterized in that** the planar configuration takes place by way of a pressing operation or deep-drawing operation.

## Revendications

1. Disque de frein comprenant
un anneau de friction (101a, 101b) composé au moins partiellement d'un premier matériau, et
une coupelle de frein (103) composée au moins partiellement d'un deuxième matériau différent du premier matériau,
l'anneau de friction (101a, 101b) possédant une collerette (201, 202, 203) configurée dans la direction axiale, et
la collerette (201, 202, 203) étant reliée à un bord de la coupelle de frein (103) orientée axialement par rapport à l'anneau de friction (101a, 101b) au moyen d'au moins un élément de liaison (102),
le bord et/ou la collerette étant de configuration plane au moins dans la zone (201, 302) de l'au moins un élément de liaison (102) et
le bord et/ou la collerette étant réalisés de forme circulaire avec une enveloppe au moins partiellement courbe et l'enveloppe étant de configuration plane au moins dans la zone (201, 302) qui est en contact avec l'élément de liaison (102).

2. Disque de frein selon la revendication 1, **caractérisé en ce que** l'élément de liaison est réalisé sous la forme d'un rivet (102).

3. Disque de frein selon l'une des revendications 1 à 2, **caractérisé en ce que** la coupelle de frein (103) se compose au moins partiellement de métal léger, notamment d'aluminium.

4. Disque de frein selon l'une des revendications 1 à 3, **caractérisé en ce que** la coupelle de frein (103) se compose au moins partiellement de métal, notamment de tôle.

5. Disque de frein selon l'une des revendications 1 à 4, **caractérisé en ce que** l'anneau de friction (101a, 101b) se compose de fonte grise.

6. Disque de frein selon l'une des revendications 1 à 5, **caractérisé en ce que** la collerette (201, 202, 203) est configurée façonnée sur l'anneau de friction (101a, 101b) .

7. Disque de frein selon l'une des revendications 1 à 6, **caractérisé en ce que** la collerette (201, 202, 203) et/ou le bord entre deux zones (201, 302) de configuration plane présentent une zone (202, 301) de configuration courbe.

8. Procédé de fabrication d'un disque de frein selon la revendication 1, **caractérisé par** les étapes suivantes :
fourniture (401) d'un anneau de friction (101a, 101b) composé au moins partiellement d'un premier matériau pourvu d'une collerette (201, 202, 203) configurée dans la direction axiale,
fourniture (402) d'une coupelle de frein (103) composée au moins partiellement d'un deuxième matériau différent du premier matériau,
liaison (403) de la collerette (201, 202, 203) à un bord de la coupelle de frein (103) orientée axialement par rapport à l'anneau de friction (101a, 101b) au moyen d'au moins un élément de liaison (102),
le bord et/ou la collerette étant de configuration plane au moins dans la zone (201, 302) de l'au moins un élément de liaison (102) et
le bord et/ou la collerette étant réalisés de forme circulaire avec une enveloppe au moins partiellement courbe et l'enveloppe étant de configuration plane au moins dans la zone (201, 302) qui est en contact avec l'élément de liaison (102).

9. Disque de frein selon la revendication 8, **caractérisé en ce que** la configuration plane a lieu par une opération de pressage ou une opération d'emboutissage profond.
